# EUROPEAN PATENT SPECIFICATION

(11) **EP 0 636 785 B1**
(45) Date of publication and mention of the grant of the patent: **10.11.1999**
(21) Application number: 94110843.3
(22) Date of filing: 12.07.1994
(51) Int. Cl.: F02M 69/54

(54) **Flow through fuel pressure regulator**
Durchflussbrennstoffdruckregler
Régulateur de pression de carburant à passage direct

(30) Priority: 14.07.1993 US 92320; 09.05.1994 US 239665
(43) Date of publication of application: 01.02.1995
(73) Proprietor: SIEMENS AUTOMOTIVE L.P., Auburn Hills, Michigan 48326-2980 (US)
(72) Inventor: Robinson, Barry S., Newport News, Virginia 23606 (US); Hornby, Michael J., Williamsburg, Virginia 23185 (US)
(74) Representative: Allen, Derek

(56) References cited:
- EP-A- 0 491 522
- FR-A- 2 443 715
- US-A- 5 076 320
- PATENT ABSTRACTS OF JAPAN vol. 9, no. 25 (M-355) 2 February 1985 & JP-A-59 170 466 (HITACHI SEISAKUSHO KK) 26 September 1984

## Description

### Field of the Invention

This invention relates to fuel pressure regulators that are used in fuel injection systems of internal combustion engines that power automotive vehicles.

### Background of the Invention

From prior patents, including commonly assigned US-A-4 928 729, US-A-4 991 556, US-A-5 002 030, and US-A-5 076 320, it is known to mount a fuel pressure regulator on a fuel rail assembly for the purpose of regulating the pressure of the fuel that is supplied to fuel injectors mounted on the fuel rail. The pressurized fuel that is delivered to the fuel rail is pumped from a fuel tank through a fuel supply conduit, and excess fuel is returned from the fuel pressure regulator's return port through a fuel return conduit to the tank. This type of system is sometimes called a return type system. A typical fuel pressure regulator used in such a system comprises a housing having a moveable wall that divides the housing into a fuel chamber and a control, or reference, chamber. The reference chamber's interior is referenced to engine intake manifold vacuum so that the regulated pressure across the fuel injectors is essentially insensitive to changes in manifold vacuum.

Another type of fuel injection system does not have a fuel return conduit and is sometimes called a non-return, returnless, or dead-headed system: In such a system, the fuel pressure is regulated at the tank, with the fuel pressure regulator being part of a pump module that is assembled into the tank and contains, inter alia, a fuel pump. If a fuel pressure regulator like the one in the above-described return system were to be used in a non-return system, a vacuum conduit from the engine intake manifold would have to be connected to its reference chamber if vacuum compensation were to be retained in the same way, and the fuel pressure regulator would simply spill excess fuel into the tank through its return port. On the other hand, if the reference chamber were exposed to the headspace of the tank, either intake manifold vacuum compensation would not be used or else it would have to be provided in some other way.

Japanese Kokai JP-A-59170466 discloses a non-return fuel regulation system in which a fuel regulator is arranged with inlet and outlet chambers separated by a moveable wall means. A valve closure arrangement is disposed within the inlet chamber which co-operates with a through-passage formed in the moveable wall means to regulate the pressure of fuel supplied from a fuel tank to fuel injectors. The valve closure arrangement includes a swivel mounted valve closure member which serves to regulate the flow of fuel through the through-passage.

According to the present invention, there is provided a fuel regulator for regulating fuel pressure within a fuel conduit which connects a fuel tank with a fuel injection system, the fuel regulator comprising:- an inlet chamber connected to receive fuel from said fuel conduit; an outlet chamber connected to said fuel tank; moveable wall means separating the inlet chamber from the outlet chamber, said moveable wall means being arranged to deformably distort in accordance with pressure differences between the inlet chamber and the outlet chamber; an annular member mounted on a central region of the said moveable wall means, said annular member having a central through hole formed therein for providing fluid communication between the inlet chamber and the outlet chamber when said moveable wall means is distorted, said annular member including a valve seat portion circumscribing said central through hole; resilient bias spring means disposed in said outlet chamber for biasing said annular member towards said inlet chamber; and valve means located in said inlet chamber including a swivel mounted closure member which co-operates with said valve seat portion to open and seal said central through hole; characterized in that said swivel mounted valve closure member comprises a truncated sphere which is disposed within a socket provided on a post within said inlet chamber, said valve closure member having a substantially flat face which co-operates with said valve seat portion to selectively restrict fuel flow through said central through hole independently of angular variations in said annular member resulting from distortions of said moveable wall means; and in that said socket has a rim which is turned slightly inwardly after said truncated sphere has been received therein so as to retain said sphere in said orifice whilst permitting swivelling.

### Brief Description of the Drawings

Fig. 1 is a view of a representative fuel system for an I.C. engine, with portions shown schematically and portions broken away.

Fig. 2 is an enlarged cross-sectional view of a portion of Fig. 1 for showing the fuel pressure regulator and its mounting in greater detail.

Fig. 3 is a view similar to Fig. 2 showing a second arrangement.

Fig. 4 is an enlarged fragmentary view of a portion of Fig. 3, but showing a different operative condition.

Fig. 5 is a view similar to Fig. 2 showing a third arrangement.

Fig. 6 is an enlarged fragmentary view of a portion of Fig. 5.

Fig. 7 is an enlarged top plan view of one of the elements of the third arrangement shown by itself.

Fig. 8 is a top plan view of another element of the third arrangement shown by itself.

Fig. 9 is an elevational view of Fig. 8.

### Description of the Preferred Embodiment

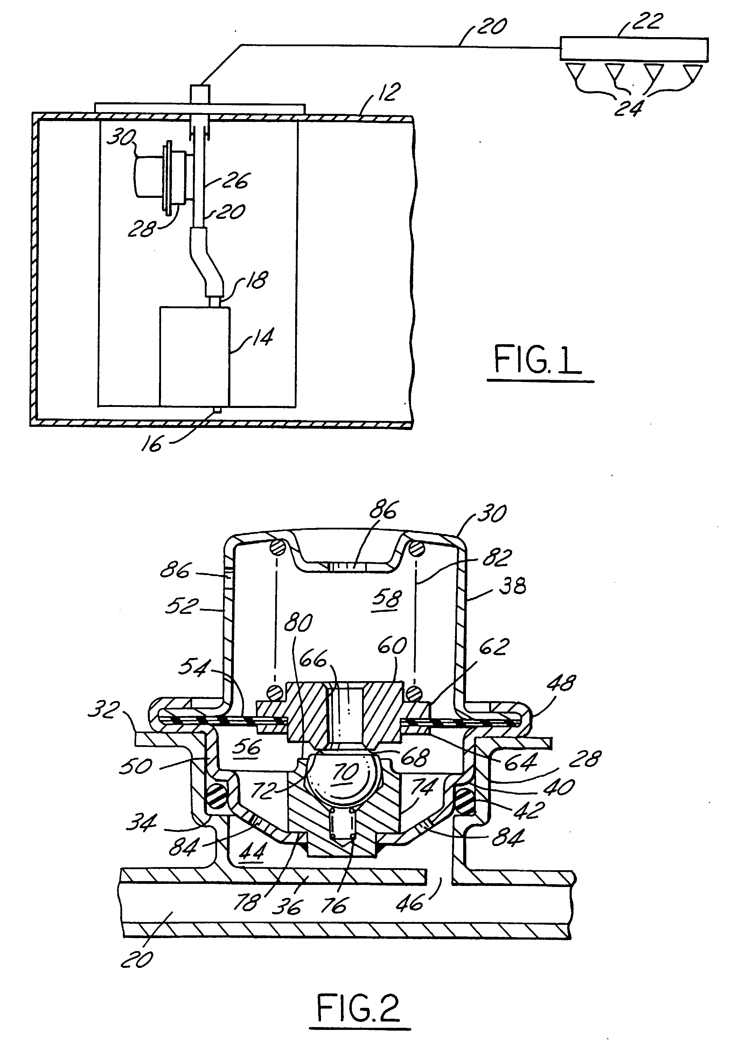

Fig. 1 shows a portion of a fuel injection system of an I.C. engine powered automotive vehicle. A pump module 10 is disposed in association with a fuel tank 12, and a portion thereof that is relevant to the present invention comprises a fuel pump 14, which is typically electrically operated. Pump 14 has a suction port 16 via which it sucks fuel from tank 12 when operated. The pressurized fuel is pumped via a pressure port 18 of pump 14 through a supply conduit 20 to an engine-mounted fuel rail 22 that comprises a gallery for serving pressurized fuel to fuel injectors 24 at selected locations on the fuel rail. The fuel injectors are individually selectively operated by an engine management ECU (not shown) to cause individual fuel injections of appropriate duration to sequentially charge individual engine cylinders. A portion of supply conduit 20 is a pipe 26 that is in module 10 and that comprises a cup-shaped receptacle 28 that is teed into the pipe. This receptacle provides for the mounting of a fuel pressure regulator 30. Fig. 2 shows greater detail.

Receptacle 28 comprises a circular sidewall having a circular flange 32 extending around its open outer end and an internal shoulder 34 spaced inwardly of flange 32 short of the receptacle's bottom wall 36. Fuel pressure regulator 30 comprises a circular housing 38 having a lower end portion received in receptacle 28. Housing 38 has an external shoulder 40 that is complementary to shoulder 34 so that the two define a space for an O-ring seal 42 that seals between them when the fuel pressure regulator is received in the receptacle as shown. This seal forms an upper boundary of an ensealed zone 44 that is cooperatively defined by the portions of receptacle 28 and housing 38 that are below seal 42. It is this zone that is teed into supply conduit 20 by a suitable passage 46 between them. Housing 38 also comprises a circular flange 48 that seats on flange 32 when fuel pressure regulator 30 is associated with receptacle 28 as shown. A bracket, or some other form of known retention means, (not shown) is used to hold the two flanges together and thereby retain the fuel pressure regulator in the receptacle mounting.

Housing 38 comprises two drawn metal shells 50 and 52 that are joined together at flange 48 to clamp the outer margin of a diaphragm 54 in a sealed manner thereby dividing the interior of the housing into a fuel inlet chamber 56 defined by the diaphragm and shell 50 and a fuel outlet chamber 58 defined by the diaphragm and shell 52. The central region of diaphragm 54 contains a circular through-hole within which a circular annular element 60 is disposed. Element 60 has a circular flange 62 extending around its O.D, and this flange bears against one side of the margin of the diaphragm surrounding its central circular through-hole. An annular retainer 64 is fitted over element 60 and against the opposite side of the margin of the central circular through-hole in the diaphragm. These parts are joined to form an assembly in which the O.D. of element 60 is sealed to the diaphragm through-hole. Element 60 itself contains a central circular through-hole 66 that provides a path of communication between the two chambers 56 and 58. At the end of element 60 that is toward chamber 56, a raised sealing lip 68 forms a seat that circumscribes through-hole 66.

Fuel inlet chamber 56 contains a closure 70 disposed for coaction with lip 68 in performance of the pressure regulating function. Closure 70 is a truncated sphere greater than a hemisphere and having a flat circular surface 72 at the truncation. Lip 68 and surface 72 are mutually confronting. Sphere 70 is captured in a spring-loaded swivel mounting which comprises a post 74 and a small helical compression spring 76. The base, or proximal end, of post 74 comprises a shoulder 78 that allows the post to be stood upright and seated on the margin of a circular hole in the bottom wall of shell 50 and joined in a sealed manner to that wall around the hole's margin. The distal end of post 74 contains a socket within which sphere 70 can swivel without too much looseness. The socket's rim 80 is turned slightly inwardly after the sphere has been received in the socket so as to thereby retain the sphere in the socket while still permitting swiveling. Prior to placement of the sphere in the socket, spring 76 is placed in a small blind hole at the bottom of the socket, and in the completed mounting of the sphere, this spring exerts a bias force resiliently urging the sphere against the socket's slightly inwardly turned rim 80.

A large helical coiled compression spring 82 is contained in outlet chamber 58. One end of spring 82 is seated on a spring seat that is integrally formed with the end wall of shell 52. The other end of spring 82 is seated on flange 62 around the outside of element 60. Spring 82 is substantially coaxial with the central region of diaphragm 54 and element 60, serving to resiliently bias the central region of diaphragm 54, including element 60, toward fuel inlet chamber 56, and hence bias sealing lip 68 toward seating on surface 72.

So that fuel from zone 44 can be communicated to fuel inlet chamber 56, one or more fuel inlet holes 84 are provided through the wall of shell 50, and so that fuel can exit fuel outlet chamber 58, one or more fuel outlet holes 86 are provided through the wall of shell 52. With fuel module 10 disposed on tank 12, holes 86 serve to provide a path of communication between the interior of the fuel outlet chamber and the interior of the fuel tank.

The operation of fuel pressure regulator 30 will now be described. Pump 14 creates a supply of pressurized fuel in supply conduit 20 and zone 44. This pressurized fuel is also supplied to fuel inlet chamber 56 via holes 84 where it acts on the face of diaphragm 54 that is exposed to this chamber. This tends to move diaphragm 54 toward chamber 58 so that sealing lip 68 unseats from sphere 70 to allow fuel to flow from chamber 56 through hole 66 into chamber 58 and into tank 12 via holes 86. The movement of the diaphragm away from sphere 70 is resisted by the force exerted by spring 82. The spring characteristic is such relative to the diaphragm and fuel supply that a pressure regulation function is accomplished, causing the fuel supply pressure to be regulated to a certain nominal pressure. If the fuel supply pressure were to tend to rise, diaphragm 54 would move farther away from sphere 70 providing less restriction to flow between chambers 56 and 58 and allowing more excess fuel to be returned to tank. If fuel supply pressure were to tend to drop, diaphragm 54 would move closer to sphere 70 providing greater restriction to flow between the two chambers and allowing less excess fuel to be returned to tank. Thus, fuel flow from chamber 56 to chamber 58 is selectively restricted as a function of incipient fuel pressure fluctuations in chamber 56 and of the force of spring 82 to cause the fuel supply pressure to be pressure regulated to a nominal pressure. To the extent that there might be any slight cocking of the diaphragm, its consequences are rendered non-significant because sphere 70 can swivel to provide sealed closure of hole 66 when pump 14 ceases to operate.

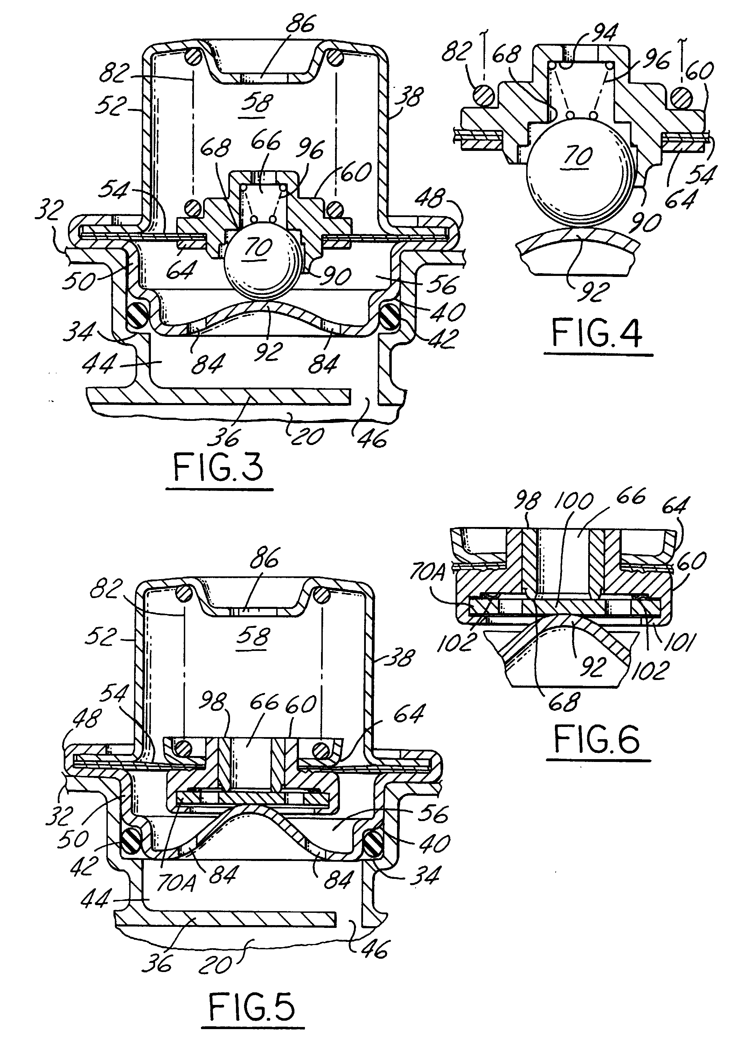

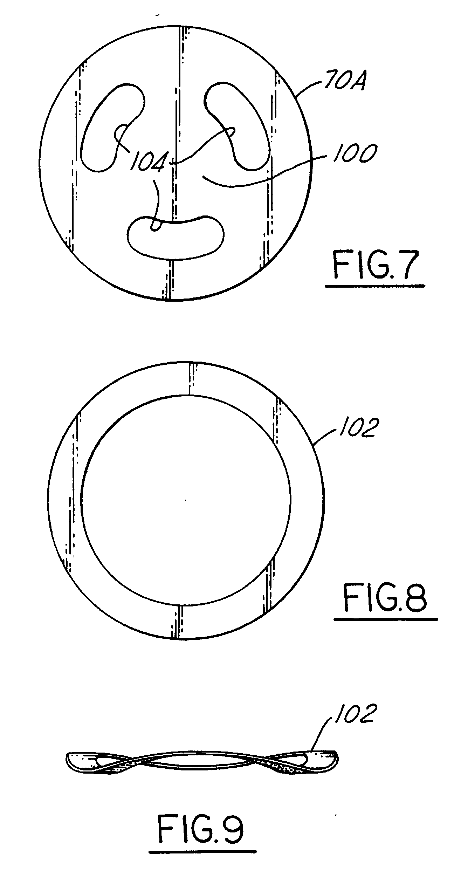

The following arrangements according to Figures 3-9 are not covered by claim 1.

The second arrangement shown in Figs. 3 and 4 comprises a number of parts like those used in the preferred embodiment, and they will be referenced by the same numbers used in the preferred embodiment, sometimes without describing detail since similarities between the corresponding parts in the two Figures will be readily perceived by the reader. The valve element in the second arrangement comprises a full sphere 70 that is carried by a circular annular element 60 whose shape is somewhat different from the corresponding element of the preferred embodiment. Element 60 of the second arrangement is annular in shape and contains a central through-hole 66. The valve seat 68 is provided at the radially inner edge of an internal shoulder of element 60. Sphere 70 is confined in a cage-like fashion by that portion of element 60 which is below seat 68 within fuel inlet chamber 56. Caging of sphere 70 is accomplished by means of a number of short curled fingers 90 that are circumferentially spaced around the lower rim of element 60 surrounding through-passage 66. These fingers curl slightly beyond an equator of sphere 70 so that greater than a hemisphere of the sphere is disposed within through passage 66. That portion of sphere 70 beyond through-passage 66 rests on a convex interior surface of a dome 92 that forms the central region of the end wall of shell 50. Fig. 3 shows spring 82 pushing element 60 and the central region of diaphragm 54 downwardly so that sphere 70 simultaneously rests on dome 92 and seats on seat 68 thereby closing through-passage 66 so that fuel cannot flow from fuel inlet chamber 56 to fuel outlet chamber 58.

The end wall of element 60 where through-passage 66 communicates with fuel outlet chamber 58 comprises an internal shoulder 94 which serves as a seat for the larger diameter end of a frustoconically shaped coil spring 96. The smaller diameter end of spring 96 bears against sphere 70. The force of spring 96 is less than that exerted by spring 82 so that the former is ineffective to unseat sphere 70 from seat 68 unless permitted to do so under certain conditions of operation occurring during use of the pressure regulator.

In use when pressurized fuel fills chamber 56 to create a net force on the movable wall that divides the two chambers 56 and 58, to displace the central region of that movable wall upwardly in the sense of increasing the volume of fuel inlet chamber 56 at the expense of decreasing that of fuel outlet chamber 58, spring 96 functions to maintain sphere 70 on dome 92 so that as a result sphere 70 unseats from seat 68. This allows excess fuel to pass from fuel inlet chamber 56 through the space created between sphere 70 and seat 68 and through through-passage 66 into fuel outlet chamber 58 where it can spill out through one of the openings 86 back into the tank. Having spring 96 of a frustoconical tapered shape as shown is advantageous because the location where it bears against sphere 70 is spaced inwardly from the opening that is created between seat 68 and sphere 70. When the pressure has been relieved, the central region of the movable wall moves downwardly causing seat 68 to close against sphere 70.

In the third arrangement of Figs. 5-9, the valve element is no longer a sphere 70 but rather a flat disk 70A. Disk 70A is caged on element 60 which once again has a somewhat different construction from the corresponding elements 60 of the preferred embodiment and the second arrangement. Element 60 comprises a body having a cylindrical inserted sleeve 98 that defines that portion of through-passage 66 leading to fuel outlet chamber 58. The end of the insert 98 that confronts an imperforate central zone 100 of disk 70A is shaped to provide the valve seat 68 as a projection similar to the raised valve seat 68 in Fig. 2. The caging of disk 70A on element 60 occurs below valve seat 68 with the outer edge of element 60 being wrapped as a flange 101 around the outer margin of disk 70A, but allowing slight axial movement of the disk relative to element 60 within the confines of the cage. A wave spring washer 102 is disposed between a shoulder of the body of element 60 and the outer margin of disk 70A and functions to resiliently bias the disk in the direction of the flange 101.

Fig. 5 shows the closed position in which the dominant force of spring 82 is pushing the central region of the movable wall downwardly so that the lower face of the central imperforate zone 100 of disk 70A is forced against dome 92 and the upper surface of the zone is forced to seat against seat 68. When fuel introduced into fuel inlet chamber 56 reaches a pressure sufficiently high to displace the central region of the movable wall slightly upwardly from the position shown in Fig. 5, spring 102 will be effective to maintain the imperforate zone 100 of disk 70A against dome 92 while element 60, including insert 66, moves upwardly relative to disk 70A unseating seat 68 from the top surface of the zone 100 of disk 70A. Fuel can now flow through the three arcuate slots 104 that are provided in a radially intermediate portion of the disk and through the space that is created between the top surface of zone 100 and seat 68. This flow passes into fuel outlet chamber 68 from which it can spill out of one of the openings 86 back into the tank. When the pressure in inlet chamber 56 drops back to a level where excess fuel no longer needs to be spilled back to the tank, spring 82 forces the central region of the movable wall downwardly once again closing seat 68 against zone 100 of disk 70A.

The disclosed arrangements are advantageous because they use a smaller number of parts than would the fuel pressure regulator of 4,928,729 if it were to be used in a returnless system. While a presently preferred embodiment has been illustrated and described, it should be appreciated that principles of the invention are applicable to other arrangements.

## Claims

1. A fuel regulator (30) for regulating fuel pressure within a fuel conduit (20) which connects a fuel tank (12) with a fuel injection system (22), the fuel regulator (30) comprising:-
an inlet chamber (56) connected to receive fuel from said fuel conduit (20);
an outlet chamber (58) connected to said fuel tank (12);
moveable wall means (54) separating the inlet chamber (56) from the outlet chamber (58), said moveable wall means (54) being arranged to deformably distort in accordance with pressure differences between the inlet chamber (56) and the outlet chamber (58);
an annular member (60) mounted on a central region of the said moveable wall means (54), said annular member (60) having a central through hole (66) formed therein for providing fluid communication between the inlet chamber (56) and the outlet chamber (58) when said moveable wall means is distorted, said annular member (60) including a valve seat portion (68) circumscribing said central through hole (66);
resilient bias spring means (82) disposed in said outlet chamber (58) for biasing said annular member (60) towards said inlet chamber (56); and
valve means (70, 72, 74, 76) located in said inlet chamber (56) including a swivel mounted closure member (70) which co-operates with said valve seat portion (68) to open and seal said central through hole (66);
characterized in that said swivel mounted valve closure member (70) comprises a truncated sphere which is disposed within a socket provided on a post (74) within said inlet chamber (56), said valve closure member (70) having a substantially flat face (72) which co-operates with said valve seat portion (68) to selectively restrict fuel flow through said central through hole (66) independently of angular variations in said annular member (60) resulting from distortions of said moveable wall means (54);
and in that said socket has a rim (80) which is turned slightly inwardly after said truncated sphere (70) has been received therein so as to retain said sphere (70) in said orifice whilst permitting swivelling.

2. A fuel regulator (30) as claimed in Claim 1, wherein said valve means (70, 72, 74, 76) further comprises a second resilient spring means (76) disposed within a cavity below said socket and is arranged to bias said truncated sphere (70) towards said rim (80) thereof.

3. A fuel regulator (30) as claimed in Claim 1 or 2, wherein said rim (80) engages said truncated sphere (70) above an equator thereof.

4. A fuel system comprising a fuel regulator as claimed in any preceding Claim.

## Patentansprüche

1. Kraftstoffregler (30) zum Regeln des Kraftstoffdrucks innerhalb einer Kraftstoffleitung (20), die einen Kraftstofftank (12) mit einem Kraftstoffeinspritzsystem (22) verbindet, mit den folgenden Bestandteilen:
Einer Einlaßkammer (56), die Kraftstoff von der Kraftstoffleitung (20) empfängt;
einer Auslaßkammer (58), die mit dem Kraftstofftank (12) verbunden ist;
einer beweglichen Wand (54), die die Einlaßkammer (56) von der Auslaßkammer (58)trennt und so angeordnet ist, daß sie in Abhängigkeit von Druckdifferenzen zwischen der Einlaßkammer (56) und der Auslaßkammer (58) verformt wird;
einem an einem mittleren Bereich der beweglichen Wand (54) montierten Ringelement (60), das ein darin ausgebildetes zentrales Durchgangsloch (66) besitzt, um eine Strömungsmittelverbindung zwischen der Einlaßkammer (56) und der Auslaßkammer (58) herzustellen, wenn die bewegliche Wand verformt ist, und das einen Ventilsitzabschnitt (68) aufweist, der das zentrale Durchgangsloch (66) umgibt;
einer elastischen Vorspannfedereinrichtung (82), die in der Auslaßkammer (58) angeordnet ist und das Ringelement (60) in Richtung auf die Einlaßkammer (56) vorspannt; und
einer in der Einlaßkammer (56) angeordneten Ventileinrichtung (70, 72, 74, 76), die ein drehbar montiertes Schließelement (70) aufweist, das mit dem Ventilsitzabschnitt (68) zum Öffnen und Abdichten des zentralen Durchgangslochs (66) zusammenwirkt;
dadurch gekennzeichnet, daß das drehbar montierte Ventilschließelement (70) eine abgeschnittene Kugel aufweist, die in einer Pfanne angeordnet ist, welche auf einem Ständer (74) innerhalb der Einlaßkammer (56) vorgesehen ist, daß das Ventilschließelement (70) eine im wesentlichen ebene Fläche (72) aufweist, die mit dem Ventilsitzabschnitt (68) zusammenwirkt, um den Kraftstoffdurchfluß durch das zentrale Durchgangsloch (66)unabhängig von Winkeländerungen des Ringelementes (60), die aus Verformungen der beweglichen Wand (54) resultieren, wahlweise einzuschränken;
und daß die Pfanne einen Rand (80) besitzt, der nach Aufnahme der abgeschnittenen Kugel (70) in der Pfanne geringfügig nach innen gebogen wird, um die Kugel (70) in der Öffnung zu halten und eine Drehbewegung derselben zu ermöglichen.

2. Kraftstoffregler (30) nach Anspruch 1, bei dem die Ventileinrichtung (70, 72, 74, 76) desweiteren eine zweite elastische Federeinrichtung (76) aufweist, die in einem Hohlraum unterhalb der Pfanne vorgesehen und so angeordnet ist, daß sie die abgeschnittene Kugel (70) in Richtung auf den Rand (80) der Pfanne vorspannt.

3. Kraftstoffregler (30) nach Anspruch 1 oder 2, bei dem der Rand (80) mit der abgeschnittenen Kugel (70) über einem Äquator der Kugel in Eingriff steht.

4. Kraftstoffsystem, das einen Kraftstoffregler nach einem der vorangehenden Ansprüche aufweist.

## Revendications

1. Régulateur de carburant (30) destiné à réguler la pression de carburant dans un conduit de carburant (20) qui raccorde un réservoir de carburant (12) à un système d'injection de carburant (22), le régulateur de carburant (30) comprenant :
une chambre d'entrée (56) raccordée pour recevoir le carburant à partir dudit conduit de carburant (20) ;
une chambre de sortie (58) raccordée audit réservoir de carburant (12) ;
un moyen à paroi mobile (54) séparant la chambre d'entrée (56) de la chambre de sortie (58), le moyen à paroi mobile (54) étant disposé pour se déformer en fonction des différences de pression entre la chambre d'entrée (56) et la chambre de sortie (58) ;
un élément annulaire (60) monté sur une zone centrale dudit moyen à paroi mobile (54), ledit élément annulaire (60) comportant un orifice traversant central (66) qui y est formé pour établir une communication de fluide entre la chambre d'entrée (56) et la chambre de sortie (58) lorsque ledit moyen à paroi mobile est déformé, ledit élément annulaire (60) incluant une partie de siège de vanne (68) circonscrivant ledit orifice traversant central (66) ;
un moyen à ressort de sollicitation élastique (82) disposé dans ladite chambre de sortie (58) pour solliciter ledit élément annulaire (60) en direction de ladite chambre d'entrée (56) ; et
un moyen à vanne (70, 72, 74, 76) situé dans ladite chambre d'entrée (56) incluant un élément de fermeture monté sur articulation (70) qui coopère avec ladite partie de siège de vanne (68) pour ouvrir et fermer de façon hermétique ledit orifice traversant central (66) ;
caractérisé en ce que ledit élément de fermeture de vanne monté sur articulation (70) comprend une sphère tronquée qui est disposée au sein d'une douille placée sur une colonne (74) au sein de ladite chambre d'entrée (56), ledit élément de fermeture de vanne (70) présentant une face sensiblement plate (72) qui coopère avec ladite partie de siège de vanne (68) afin de limiter sélectivement le flux de carburant à travers ledit orifice traversant central (66) indépendamment des variations angulaires dudit élément annulaire (60) qui résultent des distorsions dudit moyen à paroi mobile (54) ;
et en ce que ladite douille comporte un rebord (80) qui est légèrement tourné vers l'intérieur après que ladite sphère tronquée (70) y ait été reçue de manière à retenir ladite sphère (70) dans ledit orifice tout en permettant le mouvement d'articulation.

2. Régulateur de pression (30) selon la revendication 1, dans lequel ledit moyen à vanne (70, 72, 74, 76) comprend, en outre, un second moyen à ressort élastique (76) disposé au sein d'une cavité située en dessous de ladite douille et qui est disposé pour solliciter ladite sphère tronquée (70) en direction de son rebord (80).

3. Régulateur de pression (30) selon la revendication 1 ou 2, dans lequel ledit rebord (80) engage ladite sphère tronquée (70) au-dessus de son équateur.

4. Système de carburant comprenant un régulateur de carburant selon l'une quelconque des revendications précédentes.
